# EUROPÄISCHE PATENTSCHRIFT

(11) **EP 2 085 942 B1**
(45) Veröffentlichungstag und Bekanntmachung des Hinweises auf die Patenterteilung: **09.03.2016**
(21) Anmeldenummer: 08021985.0
(22) Anmeldetag: 18.12.2008
(51) Int. Cl.: G08C 17/02, H04B 17/00, H04Q 9/02, G08C 25/00

(54) **Verfahren und Vorrichtung zur automatischen Überprüfung der GNSS Signalqualität in Mautgeräten**
Method and device for automatically checking the GNSS signal quality in toll devices
Procédé et dispositif de contrôle automatique de la qualité de signal GNSS dans des appareils de péage

(30) Priorität: 29.01.2008 DE 102008006628
(43) Veröffentlichungstag der Anmeldung: 05.08.2009
(73) Patentinhaber: Deutsche Telekom AG, 53113 Bonn (DE)
(72) Erfinder: Mäthner, Nils Dr., 53125 Bonn (DE); Hartinger, Horst Dr., 8330 Feldbach (AT)
(74) Vertreter: 2K Patentanwälte Blasberg Kewitz & Reichel

(56) Entgegenhaltungen:
- DE-A1-102006 032 270
- US-A1- 2003 219 069

## Beschreibung

Die Erfindung betrifft ein Verfahren und eine Vorrichtung zur automatischen Überprüfung der Signalqualität von RF (Radio Frequenz) Emittern im Allgemeinen und von GNSS satellitensignalen im Besonderen, in mobilen Telematikgeräten, die typischerweise in einem Fahrzeug zu verbauen sind

### Überblick über die Erfindung:

Für die streckenbezogene Erhebung von Straßenbenutzungsentgelten (Maut) sind diverse Verfahren bekannt, die grob in infrastrukturbasierte Verfahren (sogenannte Bakensysteme) und satellitenbasierte Verfahren eingeteilt werden können. Bei den satellitenbasierten Verfahren wird grundsätzlich zwischen dezentraler und zentraler Erkennung der Erhebungsstellen unterschieden.

Dezentrale satellitenbasierte Mauterhebungsverfahren sind bekannt geworden unter anderem aus DE 4 344 433 und EP 1 537 541. In der Offenlegungsschrift DE 43 44 433 ist ein Verfahren beschrieben, bei dem die mittels eines GNSS-Empfängers (Globales Navigationssatellitensystem) laufend festgestellte Fahrzeugposition mit den gespeicherten Ortskoordinaten von Autobahn-Ein- und -Ausfahrten verglichen werden und die so erkannten mautpflichtigen Abschnitte an ein Abrechnungszentrum übergeben werden. Nach welchen Kriterien die Übereinstimmung der Koordinaten bestimmt wird, ist hier nicht angegeben.

Die Offenlegungsschrift EP 1 537 541 beschreibt ein solches Verfahren, welches spezifisch die Fahrzeugpositionen mit charakteristischen Referenzpositionen derart vergleicht, dass zunächst die Annäherung an eine Auffahrt erkannt wird und anschließend geprüft wird, ob innerhalb eines vorgebbaren Bereiches um die Auffahrt die Orientierung des Fahrzeugs mit der für das Auffahren auf den mautpflichtigen Abschnitt charakteristischen Orientierung übereinstimmt, das heißt die Orientierungen liegen zueinander innerhalb eines vorgebbaren Toleranzbereiches. Weiterhin wird geprüft, ob zusätzlich ein auf dem mautpflichtigen Abschnitt liegender Kontrollpunkt passiert wird. Voraussetzung für ein zuverlässiges Funktionieren all dieser Verfahren ist ein korrekter Einbau des Gerätes, der eine hohe GNSS-Empfangsqualität sicherstellt. Genau darin liegt jedoch ein praktisches Problemfeld, da bestehende Mautlösungen nach dem Einbau kein definiertes Feedback über die Einbauqualität geben.

Die Offenlegungsschrift DE 10 2006 032 270 beschreibt eine Testanordnung, die eine zuverlässige Qualitätsbewertung einer mobilen Funkempfangseinrichtung mit moderatem Aufwand ermöglicht.

### Überblick über die Erfindung

Der Erfindung liegt die Aufgabe zugrunde, ein Verfahren aufzuzeigen, mit dem ein Fahrzeuggerät für die satellitenbasierte Mauterhebung oder für andere Telematikdienste wie z.B. Navigation im Rahmen eines Selbsttests nach der Installation im Fahrzeug automatisch feststellen kann, ob der Einbau des Gerätes (insbesondere der Einbauort im Fahrzeug unter Berücksichtigung modellspezifischer Besonderheiten, wie metallbedampfte Scheiben) definierte Mindestanforderungen an die GNSS Empfangsqualität erfüllt.

Erfindungsgemäß wird diese Aufgabe dadurch gelöst, dass RF-Signalqualitäts- bzw. Navigationsinformationen erfasst werden und deren Qualitätsparameter mit einer Referenzkennlinie verglichen werden. Eine Referenzkennlinie kann z.B. empirisch gewonnen werden, indem in einer idealtypischen Einbausituation, d.h. z.B. Außenantenne oder optimal verbaute Innenantenne ohne fahrzeugbedingte Abschattungen, GNSS-Messdaten erfasst werden, welche alle typischen äußeren Empfangsbedingungen abdecken. Wenn man diese Messdaten in einem Diagramm darstellt, lässt sich für den Zusammenhang zwischen der Signalestärke, z.B. Carrier to Noise Ratio (CNO) und Elevation bzw. Azimut der Satelliten eine idealisierte Kennlinie identifizieren. Es sind natürlich auch andere Zusammenhänge zwischen Position des Satelliten und Qualität der Signale, die beim Mautgerät ankommen, denkbar. Es kann z.B. auch der Signal to Noise Ratio gewählt werden, oder die Verlustrate an Informationen. Diese Aufzählung ist nicht abschließend. Insbesondere können auch Signalqualitäten anderer RF Systeme überwacht werden wie z.B. Mobilfunk oder Car-to-Car Kommunikation.

Die beschriebene Qualitätsbewertung ist nicht nur beim Selbsttest des Gerätes, sondern grundsätzlich für jeden Navigationsdatensatz möglich. Das erfindungsgemäße Verfahren erlaubt somit auch eine laufende Qualitätsüberwachung der GNSS-Infrastruktur im Fahrzeug, so z.B. die frühzeitige Identifizierung von während der Betriebsphase entstehenden Kontaktproblemen oder Kabelbrüchen. So kann die Überprüfung in regelmäßigen Intervallen erfolgen, oder falls z.B. für einen gewissen Zeitraum mangelhafte bzw. beschädigte Daten von den GNSS erlangt werden.

In einer möglichen Ausführungsform kann die Prüfung der Signalqualität im Rahmen eines Inbetriebnahmetests nach dem Einbau des Telematikgeräts in das Fahrzeug automatisch stattfinden, wenn z.B. ein erstmaliges Anschalten des Telematikgeräts erfolgt. Hierbei springt das Gerät sofort in den Testmodus, um frühzeitig Fehler zu erkennen.

### Figurenbeschreibung:

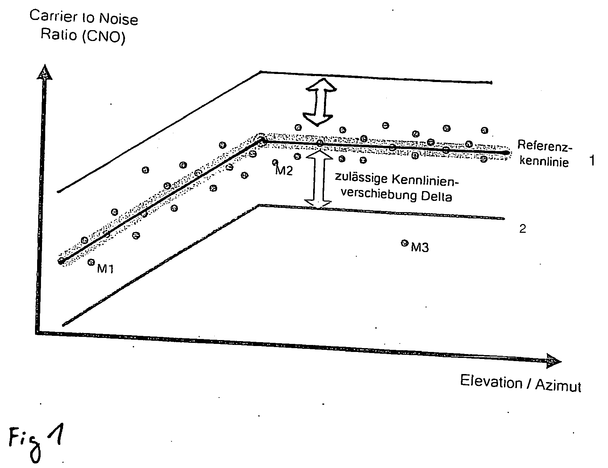

Die Fig. 1 zeigt eine Referenzkennlinie einen Zulässigkeitsbereich und Messdaten.

### Beschreibung der bevorzugten Ausführungsform.

Fig. 1 zeigt ein typisches Ausführungsbeispiel einer Kennlinie bzw. Referenzkennlinie in einem Diagramm, wobei die gewählte Referenzkennlinie 1 fett oberhalb einer Soll-Kennlinie 2 dargestellt ist. Bei praktisch anzutreffenden Einbausituationen von Fahrzeuggeräten ohne Außenantenne werden die Messpunkte tendenziell unterhalb der Kennlinie liegen, was in plausiblen Grenzen zulässig ist. Es wird eine zulässige Kennlinienverschiebung Delta definiert, um die Soll-Kennlinie 2 zu erhalten, welche im Fahrzeuggerät als einfach prüfbarer Grenzwert für die Empfangsqualität dienen kann. Dabei kann sowohl eine positive als auch eine negative Kennlinienverschiebung als Prüfkriterium herangezogen werden. Im Ausführungsbeispiel zeigen Messwerte M1 und M2 korrekte Empfangsbedingungen an, während M3 eine unzulässige Empfangsbedingung charakterisiert, welche ein Indiz für einen nicht sachgerechten Einbau darstellt.

## Patentansprüche

1. Verfahren zur automatischen Überprüfung der RF Signalqualität in Telematikgeräten, **dadurch gekennzeichnet, dass** Qualitätsparameter von RF-Signalen mit einer im Telematikgerät abgelegten vorgebbaren Referenzkennlinie (1) verglichen werden, wobei beim Einhalten einer vorgegebenen Toleranz automatisch ein korrekter Einbau gemeldet wird und/oder beim Nichteinhalten einer vorgegebenen Toleranz automatisch ein Falscheinbau gemeldet wird.

2. Das Verfahren nach dem vorhergehenden Anspruch, **dadurch gekennzeichnet, dass** der Vergleich von IstWerten mit der die Referenzkennlinie auf Fehlerquellen im Bereich der Antenne, der Antennenverkabelung und/oder der Einbausituation des Telematikgeräts im Fahrzeug anspricht.

3. Das Verfahren nach dem vorhergehenden Anspruch, **dadurch gekennzeichnet, dass** die Referenzkennlinie empirisch gewonnen wird, indem in einer idealtypischen Einbausituation der Komponenten RF-Messdaten erfasst werden, welche äußeren Empfangsbedingungen abdecken, die in Relation zu den Empfangsparametern gesetzt werden, um diese Daten dann im Telematikgerät abzuspeichern.

4. Das Verfahren nach einem oder mehreren der vorhergehenden Ansprüche, **dadurch gekennzeichnet, dass** eine approximierte Kennlinie gewählt wird, welche den Signalpegel zur Elevation bzw. zum Azimut des RF Emitters in Beziehung setzt.

5. Das Verfahren nach einem oder mehreren der vorhergehenden Ansprüche, **dadurch gekennzeichnet, dass** RF-Emitter, deren Signalqualität überprüft wird, ausgestaltet sind als GNSS Satelliten und/oder Mobilfunksender und/oder Transceiver eines Car-to-Car Kommunikationssystems.

6. Das Verfahren nach einem oder mehreren der vorhergehenden Ansprüche, **dadurch gekennzeichnet, dass** die Prüfung der Signalqualität im Rahmen eines Inbetriebnahmetests nach dem Einbau des Telematikgeräts in das Fahrzeug automatisch stattfindet.

7. Das Verfahren nach dem vorhergehenden Anspruch, **dadurch gekennzeichnet, dass** die Prüfung beim erstmaligen Anschalten des Telematikgeräts automatisch erfolgt.

8. Das Verfahren nach einem oder mehreren der vorgenannten Ansprüche, **dadurch gekennzeichnet, dass** die Prüfung der Signalqualität regelmäßig im laufenden Betrieb des Telematikgeräts automatisch stattfindet.

9. Das Verfahren nach einem oder mehreren der vorhergehenden Ansprüche, **dadurch gekennzeichnet, dass** das Telematikgerät ein Mautgerät, ein Navigationsgerät, Notrufgerät oder Gerät für Tracking/Tracing Anwendungen ist.

10. Telematikgerät zur automatischen Überprüfung der RF Signalqualität in mobilen Telematikgeräten, **dadurch gekennzeichnet, dass** Qualitätsparameter von RF-Signalen mit einer im Telematikgerät abgelegten vorgebbaren Referenzkennlinie (1) verglichen werden, wobei beim Einhalten einer vorgegebenen Toleranz automatisch ein korrekter Einbau gemeldet wird und/oder beim Nichteinhalten einer vorgegebenen Toleranz ein Falscheinbau gemeldet wird.

11. Das Telematikgerät nach dem vorhergehenden Telematikgeräteanspruch, **dadurch gekennzeichnet, dass** die Daten der Referenzkennlinie so auf einem Speicher ausgebildet sind, dass auf Fehlerquellen im Bereich der Antenne, der Antennenverkabelung und/oder der Einbausituation des Telematikgeräts im Fahrzeug anspricht.

12. Das Telematikgerät nach dem vorhergehenden Telematikgeräteanspruch, **dadurch gekennzeichnet, dass** die Referenzkennlinie empirisch gewonnen wird, indem in einer idealtypischen Einbausituation der Komponenten RF-Qualitätsdaten erfasst werden, welche vorzugsweise typische äußeren Empfangsbedingungen abdecken, die in Relation zur Position der RF-Emitter gesetzt werden, wobei die so gewonnen Daten im Speicher abgelegt werden.

13. Das Telematikgerät nach einem oder mehreren der vorhergehenden Telematikgeräteansprüche, **dadurch gekennzeichnet, dass** in einer Ausgestaltung eine approximierte Kennlinie abgespeichert ist, welche die Signalleistung zur Elevation bzw. zum Azimut der RF-Emitter in Beziehung setzt.

14. Das Telematikgerät nach einem oder mehreren der vorhergehenden Telematikgeräteansprüche, **gekennzeichnet durch** Mittel, die die Prüfung der Signalqualität im Rahmen eines Inbetriebnahmetests nach dem Einbau des Telematikgeräts in das Fahrzeug automatisch durchführen.

15. Das Telematikgerät nach dem vorhergehenden Telematikgeräteanspruch, **gekennzeichnet durch** Mittel, die die Prüfung beim erstmaligen Anschalten des Telematikgeräts automatisch durchführen.

16. Das Telematikgerät nach einem oder mehreren der vorgenannten Telematikgeräteansprüche, **gekennzeichnet durch** Mittel, die Prüfung der Signalqualität regelmäßig im laufenden Betrieb des Telematikgeräts automatisch durchführen.

17. Das Telematikgerät nach einem oder mehreren der vorhergehenden Telematikgeräteansprüche, **dadurch gekennzeichnet, dass** es ein Mautgerät, ein Navigationsgerät, ein Notrufgerät oder ein Gerät für Tracking/Tracing Anwendungen ist.

18. Das Telematikgerät nach einem oder mehreren der vorhergehenden Telematikgeräteansprüche, wobei das Mittel zur Überprüfung RF-Emitter Signalqualität, so ausgestaltet sind, dass GNSS Satelliten und/oder Mobilfunksender und/oder Transceiver eines Car-to-Car Kommunikationssystems überprüfbar sind.

## Claims

1. A method for automatic verification of the RF signal quality in telematics devices, **characterized in that** the quality parameters of the RF signals are compared with a predeterminable reference characteristic curve (1) stored in the telematics device, wherein when complying with a predetermined tolerance, a correct installation is automatically reported and / or wrong installation is automatically reported when non-complying with a predetermined tolerance.

2. The method according to the preceding claim, **characterized in that** the comparison of actual values with the reference characteristic curve is responsive to sources of errors in the area of the antenna, the antenna wiring and / or the installation situation of the telematics device in the vehicle.

3. The method according to the preceding claim, **characterized in that** the reference characteristic curve is obtained empirically by collecting RF measurement data in an ideal-typical installation situation of components, which covers the external reception conditions which are related to the reception parameters in order to save this data in the telematics device afterwards.

4. The method according to one or more of the preceding claims, **characterized in that** an approximate characteristic curve is selected, which relates the signal level to the elevation or the azimuth of the RF emitter.

5. The method according to one or more of the preceding claims, **characterized in that** the RF emitters, whose signal quality is examined, are designed as GNSS satellites and / or mobile radio transmitters and / or transceivers of a car-to-car communication system.

6. The method according to one or more of the preceding claims, **characterized in that** the examination of signal quality takes place automatically in the vehicle as part of a start-up test after installation of the telematics device.

7. The method according to claim, **characterized in that** the examination takes place automatically when turning on the telematics device for the first time.

8. The method according to one or more of the preceding claims, **characterized in that** the examination of the signal quality takes place automatically at regular intervals during operation of the telematics device.

9. The method according to one or more of the preceding claims, **characterized in that** the telematics device is a toll device, a navigation system, an emergency-call device or a device for tracking / tracing applications.

10. A Telematics device for automatically checking the RF signal quality in mobile telematics devices, **characterized in that** the quality parameters of RF signals are compared with a predeterminable reference characteristic curve (1) stored in the telematics device, wherein when complying with a predetermined tolerance, a correct installation is automatically reported and / or wrong installation is automatically reported when non-complying with a predetermined tolerance.

11. The telematics device according to the preceding telematics device claims, **characterized in that** the data of the reference characteristic curve are designed on a storage in such way that responds to sources of errors in the field of the antenna, the antenna wiring and / or the installation situation of the telematics device in the vehicle.

12. The telematics device according to the preceding telematics device claims, **characterized in that** the reference characteristic curve is obtained empirically by collecting RF measurement data in an ideal-typical installation situation of components, which cover preferably typical external reception conditions which are related to the position of the RF emitter, wherein the obtained data are stored in the memory.

13. The telematics device according to one or more of the preceding telematics device claims, **characterized in that** in one embodiment an approximated characteristic curve is stored, which relates the signal level to the elevation or the azimuth of the RF emitter.

14. The telematics device according to one or more of the preceding telematics device claims, **characterized by** means which automatically carry out the examination of the signal quality in the course of start-up tests after the installation of the telematics device in the vehicle.

15. The telematics device according to the preceding telematics device claims, **characterized by** means which automatically carry out the examination when turning on the telematics device for the first time.

16. The telematics device according to one or more of the preceding telematics device claims, **characterized by** means for automatically carrying out the examination of the signal quality periodically during operation of the telematics device.

17. The telematics device according to one or more of the preceding telematics device claims, **characterized in that** it is a toll device, a navigation system, an emergency-call device or a device for tracking / tracing applications.

18. The telematics device according to one or more of the preceding telematics device claims, wherein the means for verification of the RF-emitter signal quality are designed in such that GNSS satellites and / or mobile radio transmitters and / or transceivers of a car-to-car communication system are verifiable.

## Revendications

1. Un procédé de vérification automatique de la qualité d'un signal RF dans des dispositifs télématiques, **caractérisé en ce que** les paramètres de qualité des signaux RF sont comparés avec une courbe caractéristique de référence pré-déterminable (1) stockée au sein du dispositif télématique, dans lequel on reporte automatiquement une installation comme étant correcte lorsque conforme à une tolérance prédéterminée et/ou l'on reporte automatiquement une installation comme étant incorrecte lorsque non conforme à une tolérance prédéterminée.

2. Le procédé selon la revendication précédente, **caractérisé en ce que** la comparaison des valeurs réelles avec la courbe caractéristique de référence est en réponse d'erreurs au niveau de l'antenne, du câblage d'antenne et/ou de la situation d'installation du dispositif télématique au sein du véhicule.

3. Le procédé selon la revendication précédente, **caractérisé en ce que** la courbe caractéristique de référence est obtenue de manière empirique au moyen d'une collecte de données de mesures RF au sein de la situation d'une installation de composants typiquement idéaux, qui couvre les conditions de réception externes qui ont trait aux paramètres de réception afin de stocker ultérieurement ces données au sein du dispositif télématique.

4. Le procédé selon une ou plusieurs des revendications précédentes, **caractérisé en ce qu'**une courbe caractéristique approximative est sélectionnée, qui a trait au niveau du signal de l'élévation ou azimutale de l'émetteur RF.

5. Le procédé selon une ou plusieurs des revendications précédentes, **caractérisé en ce que** les émetteurs RF, dont la qualité du signal fait l'objet d'un examen, sont conçus sous forme de satellites GNSS et /ou de transmetteurs radio mobiles et/ou de transmetteurs/récepteurs d'un système de communication pour véhicules.

6. Le procédé selon une ou plusieurs des revendications précédentes, **caractérisé en ce que** l'examen de la qualité du signal intervient automatiquement au sein du véhicule en tant que élément d'un test de démarrage à la suite de l'installation du dispositif télématique.

7. Le procédé selon la revendication précédente, **caractérisé en ce que** l'examen intervient automatiquement à la suite de la première mise sous tension du dispositif télématique.

8. Le procédé selon une ou plusieurs des revendications précédentes, **caractérisé en ce que** l'examen de la qualité du signal intervient automatiquement à des intervalles réguliers durant le fonctionnement du dispositif télématique.

9. Le procédé selon une ou plusieurs des revendications précédentes, **caractérisé en ce que** le dispositif télématique est un dispositif de péage, un système de navigation, un dispositif de mise en relation avec des secours ou un dispositif de suivi/tracé d'applications.

10. Un dispositif télématique pour la vérification automatique de la qualité d'un signal RF au sein de dispositifs télématiques mobiles, **caractérisé en ce que** les paramètres de qualité des signaux RF sont comparé avec une courbe caractéristique de référence prédéterminable (1) stockée au sein du dispositif télématique, dans lequel on reporte automatiquement une installation comme étant correcte lorsque conforme à une tolérance prédéterminée et/ou l'on reporte automatiquement une installation comme étant incorrecte lorsque non conforme à une tolérance prédéterminée.

11. Le dispositif télématique selon les revendications de dispositif télématique précédentes, **caractérisé en ce que** les données de la courbe caractéristique de référence sont disposées sur un stockage de telle manière à répondre aux sources d'erreurs dans le champ de l'antenne, le câblage d'antenne et/ou de la situation d'installation du dispositif télématique au sein du véhicule.

12. Le dispositif télématique selon les revendications de dispositif télématique précédentes, **caractérisé en ce que** la courbe caractéristique de référence est obtenue de manière empirique au moyen d'une collecte de données de mesures RF au sein de la situation d'une installation de composants typiquement idéaux, qui couvre les conditions de réception externes qui ont trait aux paramètres de réception afin de stocker ultérieurement ces données au sein du dispositif télématique.

13. Le dispositif télématique selon une ou plusieurs revendications précédentes de dispositif télématique, **caractérisé en ce qu'**une courbe caractéristique approximative est sélectionnée, qui a trait au niveau du signal de l'élévation ou azimutale de l'émetteur RF.

14. Le dispositif télématique selon une ou plusieurs revendications précédentes de dispositif télématique, **caractérisé par** des moyens pour réaliser automatiquement l'examen de la qualité du signal durant les tests de démarrage à la suite de l'installation du dispositif télématique au sein du véhicule.

15. Le dispositif télématique selon une ou plusieurs revendications précédentes de dispositif télématique, **caractérisé par** des moyens pour réaliser automatiquement l'examen à la suite de la première mise sous tension du dispositif télématique.

16. Le dispositif télématique selon une ou plusieurs revendications précédentes de dispositif télématique, **caractérisé par** des moyens pour réaliser automatiquement un examen périodique de la qualité du signal durant le fonctionnement du dispositif télématique.

17. Le dispositif télématique selon une ou plusieurs revendications précédentes de dispositif télématique, **caractérisé en ce qu'**il consiste en un dispositif de péage, un système de navigation, un dispositif de mise en relation avec des secours ou un dispositif de suivi/tracé d'applications.

18. Le dispositif télématique selon une ou plusieurs revendications précédentes de dispositif télématique, caractérisé dans lequel les moyens de vérification de la qualité du signal d'émetteur RF sont conçus pour permettre la vérification des satellites GNSS et/ou des transmetteurs radios mobiles et/ou des transmetteurs/récepteurs d'un système de communication mobile pour véhicules.
